# EUROPÄISCHE PATENTANMELDUNG

(11) **EP 2 345 496 A1**
(43) Veröffentlichungstag der Anmeldung: **20.07.2011**
(21) Anmeldenummer: 10000435.7
(22) Anmeldetag: 18.01.2010
(51) Int. Cl.: B23B 51/08, B25B 21/00, B25F 3/00

(54) **Werkzeughalterung**

(71) Anmelder: Göttlich, Harald, 30900 Wedemark (DE)
(72) Erfinder: Göttlich, Harald, 30900 Wedemark (DE)
(74) Vertreter: Patentanwälte Thömen & Körner

(57) **Zusammenfassung**

Die Erfindung betrifft eine Werkzeughalterung (1) einer als Bohrhammer, Schlagbohrmaschine, Akkuschrauber oder dergleichen ausgebildeten Werkzeugmaschine mit einer Antriebsspindel und mit dieser verbundenem Spannfutter, bestehend aus einer Hülse (2) mit einem zur Werkzeugmaschine gerichteten hinteren Ende (3), einem vorderen Ende (5) und aus einem die Enden (3, 5) verbindenden Mittelbereich (4), wobei am vorderen Ende (5) ein Kopf (6) zur Schnellwechselaufnahme von Werkzeugbits (13; 40) angeformt ist und wobei in das hintere Ende (3) eine in das Spannfutter der Werkzeugmaschine drehfest einspannbare Antriebswelle (22) drehfest einsteckbar ist, wobei wenigstens ein Innenmantel (23; 25) der Hülse (2) einen von einer Kreisform abweichenden Querschnitt aufweist. Erfindungsgemäß ist vorgesehen, dass die Antriebswelle (22) als Bohrer (26) ausgebildet ist, welcher einen vorderen Bohrerkopf (27), einen Bohrerschaft (28) mit wenigstens einer Förderwendel (30) und einen hinteren in das Spannfutter der Werkzeugmaschine drehfest einspannbaren Einsteckschaft (29) aufweist, wobei der Einsteckschaft (29) einen Kupplungsbereich (36) mit einem Außenmantel (37) aufweist, welcher einen von einer drehrunden Form abweichenden Querschnitt aufweist, welcher dem Querschnitt des Innenmantels (23; 25) der Hülse (2) entspricht und dessen Außendurchmesser ≤ dem Innendurchmesser des Innenmantels (23; 25) der Hülse (2) ist.

## Beschreibung

Die Erfindung betrifft eine Werkzeughalterung mit den Merkmalen des Oberbegriffs des Patentanspruchs 1.

Derartige Werkzeughalterungen sind weit verbreiteter Stand der Technik und seit mindestens 20 Jahren allgemein gebräuchlich, als Akku-betriebene Werkzeugmaschinen, so genannte Akku-Schrauber, Einzug in Arbeits- und Privatleben fanden. Mit dem Aufkommen von Akkuschraubern und Werkzeughalterungen mit Schnellwechselaufsätzen zum Halten von Werkzeugköpfen, so genannten Werkzeugbits, verdrängte insbesondere die Kreuzschlitz-Schraube Nägel und andere Schlagbefestigungselemente immer mehr. Im Arbeitsalltag, insbesondere im Bereich von Instandhaltungsarbeiten, im Trockenbau, im Bereich des Immobilenbaus und der Immobilienrenovierung ist es seit langem völlig normal, vornehmlich mit zwei Werkzeugmaschinen zu arbeiten, nämlich mit einem Akkuschrauber mit in dessen Spannfutter eingespanntem Werkzeughalter und mit einem Bohrhammer. Bezüglich der gattungsgemäßen Werkzeughalterungen werden standardmäßig solche verwendet, bei denen eine Antriebswelle mit Sechskantprofil unlösbar in eine Hülse der Werkzeughalterung eingeschoben und mit der Hülse befestigt ist.

Auf dem Gebiet der Bohrhämmer hat sich ein Spannsystem für Bohrer allgemein bewährt und durchgesetzt, bei dem die Bohrer jeweils an ihrem hinteren Ende eine Schnellspannkupplung für ein Schnellspann-Bohrfutter aufweisen. Dieses Einspannsystem wurde ursprünglich von der Fa. Robert Bosch entwickelt und ist unter der Bezeichnung SDS plus bekannt.

Im Unterschied zu vielen Spannfuttersystemen ermöglicht SDS plus einen werkzeuglosen und schnellen Wechsel von Bohrern und Meißeln. Die Bohrerverriegelung und die Drehmomentübertragung erfolgen bei SDS plus getrennt und sind nahezu verschleißfrei. Die Bohrerverriegelung erfolgt mittels zweier gegenüberliegender Nuten, in die jeweils eine im Futter integrierte Kugel einrastet. Das Drehmoment wird über zwei bis zum Ende durchgehende Nuten übertragen, in die balkenförmige Erhebungen im Futter greifen. Bei axialer Bewegung des Bohrers rollen die Kugeln ab und die Erhebungen gleiten in den Nuten. Während des Hammerbohrens wird meist nur ein kleiner Teil des Längsspiels genutzt.

Insbesondere bei Montage-Arbeiten an Beton oder Mauerwerk ist es unerlässlich, zunächst ein Loch zu bohren, um anschließend in das Bohrloch eine Schraube und gegebenenfalls einen Dübel einzusetzen und die Schraube fest zu schrauben. Hierzu muss bislang entweder der zum Bohren benutze Bohrhammer weggelegt und ein mit der Werkzeughalterung versehene Akku-Schrauber aufgenommen werden, oder es muss der Bohrer aus dem Spannfutter des Bohrhammers entfernt und gegen eine Werkzeughalterung ausgetauscht werden. Beide üblichen Vorgehensweisen sind zeitraubend und ergonomisch ungünstig.

Der Erfinder hat sich die Aufgabe gestellt, eine Werkzeughalterung zu schaffen, welche die oben geschilderten Nachteile beseitigt. Insbesondere ist es Aufgabe der Erfindung, eine Werkzeughalterung der eingangs geschilderten Art dahin gehen zu verbessern, dass sie sich problemlos mit einem Bohrwerkzeug kombinieren lässt.

Diese Aufgabe wird mit einer Werkzeughalterung gelöst, welche die Merkmale des Patentanspruchs 1 aufweist.

Erfindungsgemäß ist vorgesehen, dass die Antriebswelle als Bohrer ausgebildet ist, welcher einen vorderen Bohrerkopf, einen Bohrerschaft mit wenigstens einer Förderwendel und einen hinteren in das Spannfutter der Werkzeugmaschine drehfest einspannbaren Einsteckschaft aufweist, wobei der Einsteckschaft einen Kupplungsbereich mit einem Außenmantel aufweist, welcher einen von einer drehrunden Form abweichenden Querschnitt aufweist, welcher dem Querschnitt des Innenmantels der Hülse entspricht und dessen Außendurchmesser ≤ dem Innendurchmesser des Innenmantels der Hülse ist.

Durch diesen Aufbau wird vorteilhaft erreicht, dass die Werkzeughalterung einfach auf einen vorhandenen und bereits in der Werkzeugmaschine eingespannten Bohrer aufgesteckt und drehfest mit diesem verbunden werden kann. Auf diese Weise wird auf überraschend einfache Weise ein Werkzeughalterung geschaffen, mit der es sowohl möglich ist, eine zweite Werkzeugmaschine, insbesondere in Form eines Akkuschraubers, einzusparen, als auch die bislang benötigte Rüstzeit deutlich zu reduzieren. Ein Herausnehmen des Bohrers aus dem Spannfutter mit anschließendem Einsetzen und Festspannen der Werkzeughalterung kann entfallen.

Vorzugsweise entspricht die axiale Länge des Mittelbereichs der Hülse wenigstens der axialen Länge des Bohrerschaftes mit dem Bohrerkopf des Bohrers. Der Bohrer wird mit seinem empfindlichen Bohrerschaft in der Hülse gleich einem Futteral aufgenommen, so dass die Hülse bei Arbeiten mit aufgesetzten Werkzeugbits den Bohrer vor Beschädigungen schützt.

Das hintere Ende der Hülse ist vorzugsweise zu einer Muffe aufgeweitet, deren Innenmantel mit einem dem Profil des Außenmantels des Kupplungsbereichs des Einsteckschaftes entsprechenden Profil versehen ist.

Außerdem kann in einer vorteilhaften Weiterbildung der Erfindung vorgesehen sein, dass das Profil des Innenmantels der Muffe und das Profil des Außenmantels des Kupplungsbereichs des Einsteckschaftes jeweils als Sechskant ausgebildet ist.

In einer alternativen Ausgestaltung der Erfindung kann vorgesehen sein, dass das Profil des Innenmantels der Muffe und das Profil des Außenmantels des Kupplungsbereichs des Einsteckschaftes jeweils dreieckig, polygonal, oder oval ausgebildet ist.

In anderen praktischen Weiterbildungen kann vorgesehen sein, dass ein Innenmantel des Mittelbereichs der Hülse mit einem von einer Kreisform abweichendem Profil versehen ist.

Eine andere Ausgestaltung der Erfindung sieht vor, dass das Profil des Innenmantels des Mittelbereichs der Hülse dem Profil einer Föderwendel des Bohrerschaftes des Bohrers entspricht. Bei dieser Ausgestaltung ist es möglich, einen Standard-Bohrer mit Einsteckschaft mit durchgängig zylindrischem Außenmantel als Antriebswelle zu nutzen. Die drehfeste Kupplung zwischen Bohrer und Hülse erfolgt hier durch die Förderwendel des Bohrers und dem entsprechend geformten Innenprofil der Hülse.

Ebenso liegt es im Rahmen der Erfindung vorzusehen, dass der Innenmantel des Mittelbereichs der Hülse Felder und Züge aufweist, deren Profil und deren Steigung dem Profil und den Steigungen von Spannuten und von Stegen des Bohrerschaftes entsprechen.

In einer besonders praktischen Weiterbildung der Erfindung ist vorgesehen, dass in den Kopf der Hülse eine sich im Wesentlichen axial erstreckende, als Haltebecher für einen einsteckbaren Werkzeugbit dienende Ausnehmung eingefügt ist.

Diese Ausgestaltung lässt sich noch dadurch ergänzen, dass der Haltebecher ein Innenprofil in Form eines Innensechskants aufweist, dessen lichte radiale Weite dem Durchmesser eines Außensechskants des Werkzeugbits entspricht.

Besonders vorteilhaft ist ebenso eine Ausgestaltung der Erfindung, die sich dadurch auszeichnet, dass durch einen Boden des Haltebechers eine Bohrung geführt ist, in welche ein Magnet eingesetzt ist.

Es liegt ebenso im Rahmen der Erfindung vorzusehen, dass der Werkzeugbit als Kreuzschlitz-Schraubendreher, als Schlitz-Schraubendreher, als Außensechskant oder als Torx-Bit ausgebildet ist.

Andere praktische Ausgestaltungen der Erfindung zeichnen sich dadurch aus, dass der Kopf der Hülse einen Außenmantel mit einem von einer Kreisform abweichenden Querschnittsprofil aufweist, auf den ein Werkzeugbit aufsteckbar ist, wobei das Werkzeugbit eine hintere Öffnung mit einem von einer Kreisform abweichenden Querschnittsprofil aufweist. Dies ermöglicht einen erweiterten Einsatzbereich der Werkzeughalterung, da bei dieser Ausgestaltung nicht nur handelsübliche einsteckbare, sondern auch handelsüblich aufsteckbare Werkzeugköpfe in Form von Steckschlüssel-Nüssen einsetzbar sind, was gemäß einer Weiterbildung der Erfindung vorgesehen ist.

Ebenfalls im Rahmen der Erfindung liegt es vorzusehen, dass das Werkzeugbit eine Steckschlüssel-Nuss ist.

Ebenso praktisch ist eine Weiterbildung der Erfindung, bei welcher vorgesehen ist, dass sowohl das Querschnittsprofil des Außenmantels des Kopfes der Hülse, als auch die hintere Öffnung des Werkzeugbits als Sechskant oder als Vierkant ausgebildet sind.

Besonders vorteilhaft ist eine Ausgestaltung der Erfindung, die sich dadurch auszeichnet, dass die Hülse aus einer verchromten Zinkdruckguss-Legierung, aus Werkzeugstahl, aus einem Sintermaterial, einer Aluminium-Druckguss-Legierung oder aus Messing besteht.

In einer besonders bevorzugten und vorteilhaften Weiterbildung der Erfindung kann vorgesehen sein, dass der Einsteckschaft des Bohrers an seinem hinteren Ende einen Einspannbereich zum Einspannen in das Spannfutter der Werkzeugmaschine aufweist, wobei der Einspannbereich zwei längsovale Verriegelungsaussparungen und zwei zum rückwärtigen Ende hin offene Drehmitnahmenuten aufweist, wobei jeweils eine Drehmitnahmenut zu den Verriegelungsaussparungen um 90° versetzt am Einsteckschaft angeordnet ist.

Schließlich kann gemäß einer besonders bevorzugten Ausgestaltung der Erfindung vorgesehen sein, dass der Einspannbereich des Einsteckschaftes des Bohrers als SDS plus - Einspannsystem ausgebildet ist.

Als besonders geeignet hierfür hat sich ein Werkzeughalterung herausgestellt, welche in der nachfolgenden Zeichnung dargestellt ist. Darin zeigt
- Fig. 1: eine Aufsicht auf ein Ausführungsbeispiel einer Werkzeughalterung gemäß der Erfindung in unmontiertem Zustand,
- Fig. 2: die Werkzeughalterung aus Fig. 1 im montierten Zustand in seitlicher Ansicht,
- Fig. 3: eine Längsschnittansicht durch die Werkzeughalterung aus Fig. 2 entlang der Linie A-A',
- Fig. 4: eine Radialschnittansicht durch die Werkzeughalterung aus Fig. 2 entlang der Linie B-B',
- Fig. 5: die Werkzeughalterung aus Fig. 1 im montierten Zustand in einer anderen Ansicht, und
- Fig. 6: eine Längsschnittansicht durch die Werkzeughalterung aus Fig. 5.

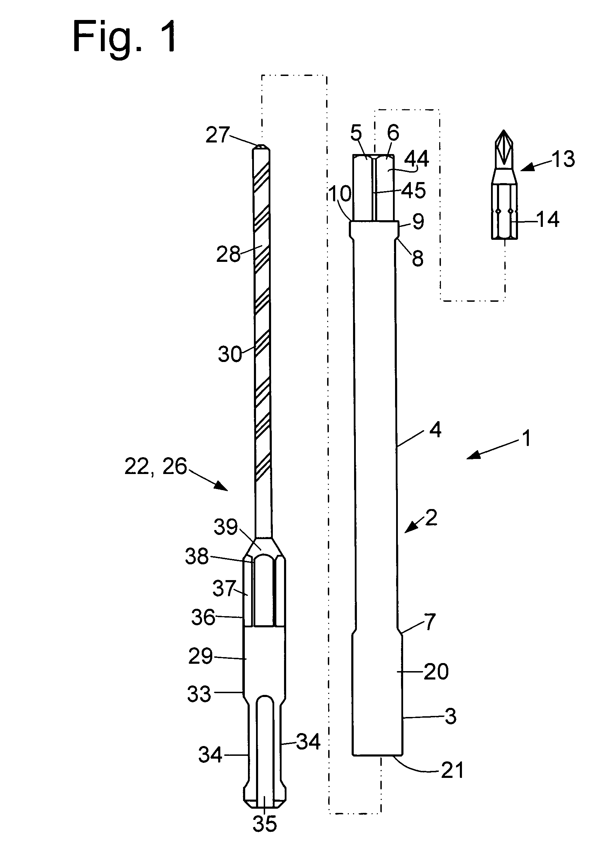

In den Figuren 1 - 6 ist ein Ausführungsbeispiel einer erfindungsgemäßen Werkzeughalterung 1 dargestellt. Die Werkzeughalterung 1 ist dazu bestimmt, mit einer als Bohrhammer, als Schlagbohrmaschine oder als Akkuschrauber ausgebildeten, nicht dargestellten Werkzeugmaschine mit einer Antriebsspindel und mit dieser verbundenem Spannfutter lösbar verbunden zu werden. Die Werkzeughalterung 1 dient in an sich bekannter Weise zur Schnellwechselaufnahme von Werkzeugeinsätzen in Form von handelsüblichen Werkzeugbits.

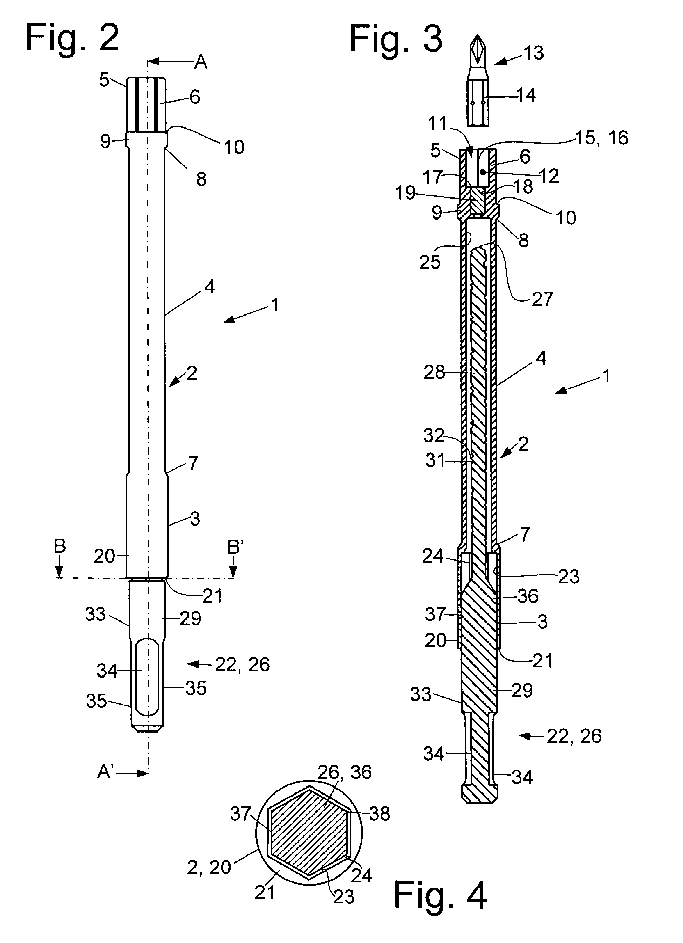

Die in Figur 1 in Seitenansicht im unmontierten Zustand dargestellte Werkzeughalterung 1 besteht im Wesentlichen aus einer Hülse 2 mit einem offenen hinteren Ende 3, einem zylindrischen Mittelbereich 4 und einem am vorderen Ende 5 angeformten Kopf 6. Mit "hinten" wird im nachfolgenden stets ein Endbereich der Längsachse der Hülse 2 bezeichnet, welcher im montierten Zustand zur Werkzeugmaschine gerichtet ist, während mit "vorne" ein endständiger Bereich der Hülse 2 bezeichnet ist, welcher von der Werkzeugmaschine entfernt ist. Der Ausdruck "axial" bezieht sich auf die in Fig. 2 mit der Line A-A' eingezeichnete Längsachse, während sich der Ausdruck "radial" auf Ebenen radial bzw. quer zur Längsachse A-A' bezieht und in Fig. 2 mit der Linie B-B' zeichnerisch dargestellt ist.

Das hintere, zu einer Werkzeugmaschine gerichtete Ende 3 der Hülse 2 weist im dargestellten Ausführungsbeispiel einen größeren Durchmesser als der Mittelbereich 4 auf und verjüngt sich zum Mittelbereich 4 über eine Schulter 7. Der Mittelbereich 4 weitet sich über eine vordere Schulter 8 zu einem massiven Rand 9, an welchen der Kopf 6 angeformt ist. Der Kopf 6 ist durch einen Absatz 10 vom Rand 9 radial abgesetzt.

In Fig. 2 ist die Werkzeughalterung 1 im montierten Zustand, in Fig. 3 im Längsschnitt entlang der Linie A-A' aus Fig. 2 und in Fig. 4 im Radialschnitt entlang der Linie B-B' dargestellt.

Axial in den Kopf 6 eingefügt ist eine sich im Wesentlichen axial erstreckende Ausnehmung 11, welche als Haltebecher 12 für einen einsteckbaren Werkzeugbit 13 dient. Der in den Fig. 1 und 3 dargestellte Werkzeugbit 13 mit Außensechskant 14 ist jeweils als Kreuzschlitz-Schraubendreher ausgebildet, kann jedoch auch als ein anderer Werkzeugbit 13 ausgebildet sein, beispielsweise als Schlitz-Schraubendreher, Außensechskant, Torx-Bit, und dergleichen. Entsprechend kann der Außensechskant 14 als handelsüblicher 1/4" Außensechskant-Bit ausgebildet sein.

Der Haltebecher 12 der Ausnehmung 11 weist ein Innenprofil 15 in Form eines Innensechskants 16 auf, dessen lichte radiale Weite dem Durchmesser des Außensechskants 14 des Werkzeugbits 13 entspricht. Durch einen Boden 17 des Haltebechers 12 ist eine Bohrung 18 geführt, in welche ein Magnet 19 eingesetzt ist. Der Magnet 19 hält den Werkzeugbit 13 axial im Haltebecher 12. Auf dem Boden 17 liegt der Werkzeugbit 13 auf bzw. dient der Boden 17 als axialer Anschlag und Einschubbegrenzung für den Werkzeugbit 13.

Das hintere Ende 3 der Hülse 2 ist gegenüber dem Mittelbereich 4 der Hülse 2 durchmessergrößer und zu einem Flansch oder einer Muffe 20 erweitert, in deren Hülsenmund 21 eine noch zu beschreibende Antriebswelle 22 einführbar ist. Um eine axial lösbare, aber drehfeste Verbindung mit der Antriebswelle 22 zu ermöglichen, weist ein Innenmantel 23 der Hülse 2 wenigstens im Bereich des hinteren Endes 3 der Hülse bzw. im Bereich der Muffe 20 einen radialen Querschnitt auf, welcher von einer Kreisform abweicht. Im dargestellten Ausführungsbeispiel ist der Innenmantel 23 der Muffe 20 in radialer Richtung als Innensechskant 24 ausgebildet. Es liegt jedoch auch im Rahmen der Erfindung, den Innenmantel 23 der Muffe 20 mit einem anderen, nicht-drehrunden Profil zu versehen, beispielsweise mit einem dreieckigen, polygonalem, ovalem oder einem anderen, eine drehfeste Verbindung mit der Antriebswelle 22 ermöglichendem Profil.

Ein Innenmantel 25 des Mittelbereichs 4 der Hülse 2 weist dagegen einen drehrunden Querschnitt und einen kleineren Durchmesser als der Innenmantel 23 der Muffe 20.

Die Antriebswelle 22 ist als Bohrer 26 ausgebildet. Der Bohrer 26 weist in an sich bekannter Weise einen vorderen Bohrerkopf 27, einen Bohrerschaft 28 und einen hinteren Einsteckschaft 29 auf, welcher in das Spannfutter der Werkzeugmaschine drehfest einspannbar ist. Der Bohrerschaft 28 weist eine in den Figuren nur angedeutete Förderwendel 30 auf, welche wenigstens zwei spiralförmige Spannuten 31 und zwischen den Spannuten 31 befindliche Stege 32 aufweist.

Der Einsteckschaft 29 des Bohrers 26 weist an seinem hinteren Ende einen Einspannbereich 33 zum Einspannen in das Spannfutter der Werkzeugmaschine auf, welcher in an sich bekannter Weise zwei längsovale Verriegelungsaussparungen 34 und zwei zum rückwärtigen Ende hin offene Drehmitnahmenuten 35 aufweist, wobei jeweils eine Drehmitnahmenut 35 zu den Verriegelungsaussparungen 34 um 90° am Einsteckschaft 39 angeordnet ist. Diese Konstellation des Einspannbereichs 33 entspricht einem handelsüblichen Bohrer für Bohrhämmer mit SDS plus - Einspannsystem.

Der Einspannbereich 33 des Einsteckschaftes 29 geht nach vorne in einen Kupplungsbereich 36 über, welcher der drehfesten Verbindung des Bohrers 26 mit der Muffe 20 der Hülse 2 dient. Der Kupplungsbereich 36 weist einen Außenmantel 37 auf, welcher im Gegensatz zum Außenmantel 38 des Einspannbereichs 33 des Einsteckschaftes 29 nicht drehrund ausgebildet ist, sondern einen Querschnitt aufweist, welcher von einer drehrunden Form abweicht und dem Profil des Innenmantels 23 der Muffe 20 der Hülse 2 entspricht. Im dargestellten Ausführungsbeispiel ist daher der Außenmantel 37 des Kupplungsbereichs 36 als Außensechskant 38 ausgebildet, dessen Außendurchmesser gleich oder kleiner dem Innendurchmesser des Innensechskants 24 der Muffe 20 ist, was in Fig. 4 in Radialschnittansicht dargestellt ist. Der Kupplungsbereich 36 verjüngt sich über eine konische Schulter 39 zum Bohrerschaft 28.

Es liegt jedoch auch im Rahmen der Erfindung, den Außenmantel 37 des Kupplungsbereichs 36 mit einem anderen, nicht-drehrunden Profil zu versehen, beispielsweise mit einem dreieckigen, polygonalem, ovalem oder einem anderen, eine drehfeste Verbindung mit der Hülse 2 ermöglichendem Profil.

Die axiale Länge des Mittelbereichs 4 der Hülse 2 ist so bemessen, dass sie wenigstens der axialen Länge des Bohrerschaftes 28 mit dem Bohrerkopf 27 des Bohrers 26 entspricht, so dass der Bohrerschaft 28 und der Bohrerkopf 27 vollständig in der Hülse 2 aufgenommen werden können. Die Hülse 2 der Werkzeughalterung 1 muss lediglich auf den Bohrer 26 aufgesteckt werden, um eine axial lösbare, aber drehfeste Verbindung der Hülse 2 mit dem Bohrer 26 herzustellen. Sobald die Muffe 20 mit ihrem profilierten Innenmantel 23 form- oder kraftschlüssig über den profilierten Außenmantel 37 des Kupplungsbereiches 36 des Bohrers 26 geschoben ist, ist die drehfeste Verbindung der Hülse 2 mit dem Bohrer 26 hergestellt.

Nun kann ein gewünschter Werkzeugbit 13 in den Haltebecher 12 eingesteckt werden.

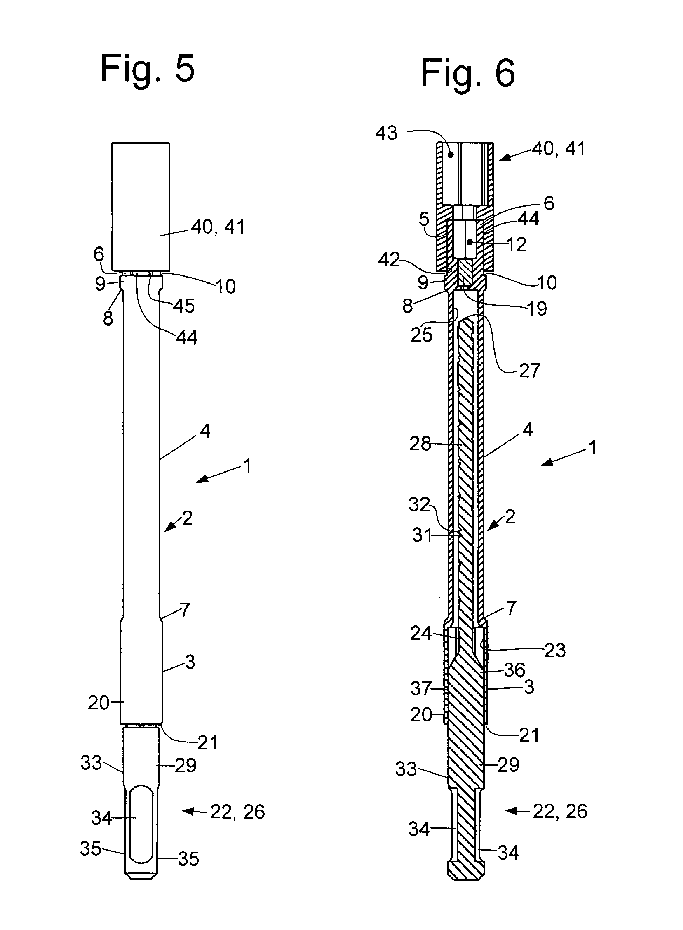

In Fig. 5 und Fig. 6 ist dargestellt, dass sich beim erfindungsgemäßen Ausführungsbeispiel der Kopf 6 der Hülse 2 nicht nur als Schnellwechselaufnahme von einsteckbaren Werkzeugbits 13, sondern auch als Schnellwechselaufnahme von aufsteckbaren Werkzeugbits 40 nutzen lässt, welches im dargestellten Ausführungsbeispiel als handelsübliche 1/2" Steckschlüssel-Nuss 41 ausgebildet ist und eine hintere Öffnung 42 mit einem von einer Kreisform abweichenden Querschnittsprofil in Form eines Sechskantprofils, sowie eine vordere Öffnung 43 mit Sechskantprofil zum drehfesten Einsetzen von nicht dargestellten Schraubbolzen mit Sechskantkopf aufweist.

Um die Steckschlüssel-Nuss 41 drehfest mit dem Kopf 6 der Hülse 2 verbinden zu können, weist der Kopf 6 einen Außenmantel 44 mit einem von einer Kreisform abweichenden Querschnittsprofil auf, welches dem Innenprofil der hinteren Öffnung 42 der Steckschlüssel-Nuss 41 entspricht, im gezeigten Ausführungsbeispiel also ein Sechskantprofil 45 aufweist. Es liegt jedoch auch im Rahmen der Erfindung, den Außenmantel 44 des Kopfes 6 mit einem anderen Profil zu versehen, beispielsweise mit einem Vierkantprofil, wie dies für handelsübliche 3/8" - Steckschlüssel-Nüsse typisch ist. Auch bei aufgestecktem Werkzeugbit 40 sorgt der Magnet 19 für einen ausreichenden axialen Halt des Werkzeugbits 40 auf dem Kopf 6.

Die in den Figuren 1 - 6 dargestellte Werkzeughalterung 1 ermöglicht es auf einfachste Weise, die benutzte Werkzeugmaschine, in welche der Bohrer 26 eingespannt ist, zu einem gewünschten Zeitpunkt zum Verrichten nicht bohrender Arbeiten zu verwenden. Die Hülse 2 wird einfach auf den Bohrer 26 aufgesteckt, anschließend wird ein gewünschte Werkzeugbit 13 in den Haltebecher 12 eingesteckt oder ein Werkzeugbit 40 auf den Außenmantel 44 des Kopfes 6 aufgesteckt. Nach Abschluss der mittels des Werkzeugbits 13 bzw. 40 erfolgten Arbeiten wird die Hülse 2 wieder vom Bohrer 26 abgezogen, wodurch der Bohrer 26 sofort wieder zum Bohren zur Verfügung steht.

Die Hülse 2 besteht im gezeigten Ausführungsbeispiel aus einer verchromten Zinkdruckguss-Legierung, kann jedoch auch aus einem anderen geeigneten Werkstoff bestehen, beispielsweise aus Werkzeugstahl, aus einem Sintermaterial, einer Aluminium-Druckguss-Legierung oder aus Messing.

Abweichend vom dargestellten Ausführungsbeispiel liegt es auch im Rahmen der Erfindung, den Innenmantel 25 des Mittelbereichs 4 der Hülse 2 mit einem von einer Kreisform abweichendem Profil zu versehen. So ist es denkbar, den Innenmantel 25 der Hülse 2 mit einem Profil zu versehen, welches dem Profil des Bohrerschaftes 28 bzw. der Förderwendel 30 entspricht. In diesem Fall weist der Innenmantel 25 Felder und Züge auf, deren Profil und deren Steigung dem Profil und den Steigungen der Spannuten 31 und der Stege 32 des Bohrerschaftes 28 entsprechen. In diesem Fall dient die Förderwendel 30 des Bohrers 26 als drehfestes Kupplungselement zur Hülse 2.

### Bezugszeichenliste

- 1: Werkzeughalterung
- 2: Hülse
- 3: Hinteres Ende der Hülse 2
- 4: Mittelbereich der Hülse 2
- 5: Vorderes Ende der Hülse 2
- 6: Kopf
- 7: Schulter
- 8: Schulter
- 9: Rand
- 10: Absatz
- 11: Ausnehmung
- 12: Haltebecher
- 13: Werkzeugbit
- 14: Außensechskant des Werkzeugbits
- 15: Innenprofil
- 16: Innensechskant des Haltebechers
- 17: Boden
- 18: Bohrung
- 19: Magnet
- 20: Muffe
- 21: Hülsenmund
- 22: Antriebswelle
- 23: Innenmantel
- 24: Innensechskant
- 25: Innenmantel
- 26: Bohrer
- 27: Bohrerkopf
- 28: Bohrerschaft
- 29: Einsteckschaft
- 30: Förderwendel
- 31: Spannut
- 32: Steg
- 33: Einspannbereich
- 34: Verriegelungsaussparung
- 35: Drehmitnahmenut
- 36: Kupplungsbereich
- 37: Außenmantel
- 38: Außensechskant
- 39: Schulter
- 40: Werkzeugbit
- 41: Steckschlüssel-Nuss
- 42: Hintere Öffnung
- 43: Vordere Öffnung
- 44: Außenmantel des Kopfes 6
- 45: Sechskantprofil

## Patentansprüche

1. Werkzeughalterung (1) einer als Bohrhammer, Schlagbohrmaschine, Akkuschrauber oder dergleichen ausgebildeten Werkzeugmaschine mit einer Antriebsspindel und mit dieser verbundenem Spannfutter, bestehend aus einer Hülse (2) mit einem zur Werkzeugmaschine gerichteten hinteren Ende (3), einem vorderen Ende (5) und aus einem die Enden (3, 5) verbindenden Mittelbereich (4), wobei am vorderen Ende (5) ein Kopf (6) zur Schnellwechselaufnahme von Werkzeugbits (13; 40) angeformt ist und wobei in das hintere Ende (3) eine in das Spannfutter der Werkzeugmaschine drehfest einspannbare Antriebswelle (22) drehfest einsteckbar ist, wobei wenigstens ein Innenmantel (23; 25) der Hülse (2) einen von einer Kreisform abweichenden Querschnitt aufweist, **dadurch gekennzeichnet, dass** die Antriebswelle (22) als Bohrer (26) ausgebildet ist, welcher einen vorderen Bohrerkopf (27), einen Bohrerschaft (28) mit wenigstens einer Förderwendel (30) und einen hinteren in das Spannfutter der Werkzeugmaschine drehfest einspannbaren Einsteckschaft (29) aufweist, wobei der Einsteckschaft (29) einen Kupplungsbereich (36) mit einem Außenmantel (37) aufweist, welcher einen von einer drehrunden Form abweichenden Querschnitt aufweist, welcher dem Querschnitt des Innenmantels (23; 25) der Hülse (2) entspricht und dessen Außendurchmesser ≤ dem Innendurchmesser des Innenmantels (23; 25) der Hülse (2) ist.

2. Werkzeughalterung nach Anspruch 1, **dadurch gekennzeichnet, dass** die axiale Länge des Mittelbereichs (4) der Hülse (2) wenigstens der axialen Länge des Bohrerschaftes (28) mit dem Bohrerkopf (27) des Bohrers (26) entspricht.

3. Werkzeughalterung nach Anspruch 1 oder 2, **dadurch gekennzeichnet, dass** das hintere Ende (3) der Hülse (2) zu einer Muffe (20) aufgeweitet ist, deren Innenmantel (23) mit einem dem Profil des Außenmantels (37) des Kupplungsbereichs (36) des Einsteckschaftes (29) entsprechenden Profil versehen ist.

4. Werkzeughalterung nach Anspruch 3, **dadurch gekennzeichnet, dass** das Profil des Innenmantels (23) der Muffe (20) und das Profil des Außenmantels (37) des Kupplungsbereichs (36) des Einsteckschaftes (29)jeweils als Sechskant ausgebildet ist.

5. Werkzeughalterung nach Anspruch 3, **dadurch gekennzeichnet, dass** das Profil des Innenmantels (23) der Muffe (20) und das Profil des Außenmantels (37) des Kupplungsbereichs (36) des Einsteckschaftes (29)jeweils dreieckig, polygonal, oder oval ausgebildet ist.

6. Werkzeughalterung nach Anspruch 1 oder 2, **dadurch gekennzeichnet, dass** ein Innenmantel (25) des Mittelbereichs (4) der Hülse (2) mit einem von einer Kreisform abweichendem Profil versehen ist.

7. Werkzeughalterung nach Anspruch 6, **dadurch gekennzeichnet, dass** das Profil des Innenmantels (25) des Mittelbereichs (4) der Hülse (2) dem Profil einer Föderwendel (30) des Bohrerschaftes (28) des Bohrers (26) entspricht.

8. Werkzeughalterung nach Anspruch 7, **dadurch gekennzeichnet, dass** der Innenmantel (25) des Mittelbereichs (4) der Hülse (2) Felder und Züge aufweist, deren Profil und deren Steigung dem Profil und den Steigungen von Spannuten (31) und von Stegen (32) des Bohrerschaftes (28) entsprechen.

9. Werkzeughalterung wenigstens nach Anspruch 1, **dadurch gekennzeichnet, dass** in den Kopf (6) der Hülse (2) eine sich im Wesentlichen axial erstreckende, als Haltebecher (12) für einen einsteckbaren Werkzeugbit (13) dienende Ausnehmung (11) eingefügt ist.

10. Werkzeughalterung nach Anspruch 9, **dadurch gekennzeichnet, dass** der Haltebecher (12) ein Innenprofil (15) in Form eines Innensechskants (16) aufweist, dessen lichte radiale Weite dem Durchmesser eines Außensechskants (14) des Werkzeugbits (13) entspricht.

11. Werkzeughalterung wenigstens nach Anspruch 9, **dadurch gekennzeichnet, dass** durch einen Boden (17) des Haltebechers (12) eine Bohrung (18) geführt ist, in welche ein Magnet (19) eingesetzt ist.

12. Werkzeughalterung wenigstens nach Anspruch 1, **dadurch gekennzeichnet, dass** der Werkzeugbit (13) als Kreuzschlitz-Schraubendreher, als Schlitz-Schraubendreher, als Außensechskant oder als Torx-Bit ausgebildet ist.

13. Werkzeughalterung wenigstens nach Anspruch 1, **dadurch gekennzeichnet, dass** der Kopf (6) der Hülse (2) einen Außenmantel (44) mit einem von einer Kreisform abweichenden Querschnittsprofil aufweist, auf den ein Werkzeugbit (40) aufsteckbar ist, wobei das Werkzeugbit (40) eine hintere Öffnung (42) mit einem von einer Kreisform abweichenden Querschnittsprofil aufweist.

14. Werkzeughalterung nach Anspruch 13, **dadurch gekennzeichnet, dass** das Werkzeugbit (40) eine Steckschlüssel-Nuss (41) ist.

15. Werkzeughalterung wenigstens nach Anspruch 13, **dadurch gekennzeichnet, dass** sowohl das Querschnittsprofil des Außenmantels (44) des Kopfes (6) der Hülse (2), als auch die hintere Öffnung (42) des Werkzeugbits (4) als Sechskant oder als Vierkant ausgebildet sind.

16. Werkzeughalterung wenigstens nach Anspruch 1, **dadurch gekennzeichnet, dass** die Hülse (2) aus einer verchromten Zinkdruckguss-Legierung, aus Werkzeugstahl, aus einem Sintermaterial, einer Aluminium-Druckguss-Legierung oder aus Messing besteht.

17. Werkzeughalterung wenigstens nach Anspruch 1, **dadurch gekennzeichnet, dass** der Einsteckschaft (29) des Bohrers (26) an seinem hinteren Ende einen Einspannbereich (33) zum Einspannen in das Spannfutter der Werkzeugmaschine aufweist, wobei der Einspannbereich (33) zwei längsovale Verriegelungsaussparungen (34) und zwei zum rückwärtigen Ende hin offene Drehmitnahmenuten (35) aufweist, wobei jeweils eine Drehmitnahmenut (35) zu den Verriegelungsaussparungen (34) um 90° versetzt am Einsteckschaft (39) angeordnet ist.

18. Werkzeughalterung nach Anspruch 17, **dadurch gekennzeichnet, dass** der Einspannbereich (33) des Einsteckschaftes (29) des Bohrers (26) als SDS plus - Einspannsystem ausgebildet ist.
